# EUROPÄISCHE PATENTSCHRIFT

(11) **EP 3 430 356 B1**
(45) Veröffentlichungstag und Bekanntmachung des Hinweises auf die Patenterteilung: **18.08.2021**
(21) Anmeldenummer: 17706243.7
(22) Anmeldetag: 21.02.2017
(51) Int. Cl.: G01C 21/34

(54) **VERFAHREN ZUM BETRIEB EINES NAVIGATIONSSYSTEMS**
METHOD OF OPERATING A NAVIGATION SYSTEM
PROCÉDÉ DE FONCTIONNEMENT D'UN SYSTÈME DE NAVIGATION

(30) Priorität: 18.03.2016 DE 102016204522
(43) Veröffentlichungstag der Anmeldung: 23.01.2019
(73) Patentinhaber: Bayerische Motoren Werke Aktiengesellschaft, 80809 München (DE)
(72) Erfinder: TAVA, Marcello, 81369 München (DE)
(86) Internationale Anmeldenummer: PCT/EP2017/053822
(87) Internationale Veröffentlichungsnummer: WO 2017/157617

(56) Entgegenhaltungen:
- EP-A1- 2 270 764
- US-A1- 2009 048 775
- US-A1- 2010 250 114

## Beschreibung

Die vorliegende Erfindung betrifft ein Verfahren zum Betrieb eines Navigationssystems eines Fahrzeugs sowie ein Navigationssystem für ein Fahrzeug.

Derartige Navigationssysteme ermöglichen es einem Benutzer des Fahrzeugs, eine Route von einem Start zu einem Ziel berechnen zu lassen und, insbesondere während der Fahrt vom Start zum Ziel, Navigationshinweise zu erhalten, etwa Anweisungen zum abbiegen oder Hinweise bei Abweichungen von der geplanten Route. Üblicherweise hat ein Navigationssystem dazu ein Positionierungssystem, mittels dem es die aktuelle räumliche Position des Fahrzeugs bestimmen kann. Auch der Start und das Ziel werden üblicherweise als räumliche Positionen angegeben, was typischerweise einerseits durch die Ermittlung der aktuellen räumlichen Position als Startposition und andererseits durch die Angabe einer bestimmten Adresse als Ziel geschieht. Zur Berechnung der Route lassen sich Landkartendaten, etwa ein Straßennetz, verwenden. Diese können im Navigationssystem oder extern gespeichert sein, wobei auch die Berechnung intern, also im Navigationssystem, oder extern erfolgen kann. Die Berechnung der Route stellt ein Optimierungsproblem dar. Folglich können dabei verschiedene Optimierungskriterien verwendet oder verschieden gewichtet werden. Die Wahl eines Optimierungskriteriums kann sich insbesondere auf die Auswahl einer Route beziehen, deren Routenlänge oder berechnete Fahrzeit optimiert ist.

Aus der US 9,209,914 B2 ist ein Navigationssystem bekannt, welches ein Serversystem mit einer ersten kartographischen Datenbank und einem ersten Routenberechnungsmodul aufweist, sowie ein Mobilgerät mit einem Geopositionierungsmittel mit einer zweiten kartographischen Datenbank und einem zweiten Routenberechnungsmodul. Dabei sendet das Mobilgerät eine Routenanfrage zum entfernten Serversystem, und das Serversystem berechnet eine erste Route von der aktuellen Position zum Zielpunkt. Die erste Route weist eine Liste von Manövrierpunkten und eine Liste von Wegpunkten auf, die sich auf der ersten Route befinden und von den Manövrierpunkten beabstandet sind. Basierend auf den Wegpunkten und der zweiten kartographischen Datenbank generiert das zweite Routenberechnungsmodul eine zweite Route.

Aus der US 5,610,821 ist ein System zum Bereitstellen eines zentral koordinierten, ganz allgemeinen Routensystems bekannt. Dieses weist Verkehrsrouten in der Weise zu, dass eine optimale Stabilität des Verkehrssystems gegeben ist. Das System weist feste Computer, die nahtlos mit allen Fahrzeugen in einem Gebiet kommunizieren können, und Fahrzeug-Computer auf. Dabei ist das System interaktiv, indem die festen Computer Daten, etwa die gewünschte Route, Position oder die zum Durchfahren eines Abschnitts benötigte Zeit, von den Fahrzeugkomponenten empfangen und die systembezogen optimale Route bestimmen sowie an die Fahrzeuge senden.

US 2010/0250114 A1 offenbart ein Navigationssystem für ein Fahrzeug, bei dem eine Route durch einen fahrzeugexternen Server ermittelt wird. Fahrzeugintern wird auch eine Route ermittelt, auf deren Basis eine Streckenführung für das Fahrzeug erfolgt, bis die von dem fahrzeugexternen Server berechnete Route empfangen wurde.

EP 2 270 764 A1 offenbart ein weiteres servergestütztes Streckenführungs- und Navigationssystem.

US 2009/0048775 A1 offenbart ein weiteres servergestütztes Navigationssystem, bei dem verschiedene Parameter, wie z. B. der Fahrzeugtyp, bei der Routenermittlung berücksichtigt werden.

Die Aufgabe der Erfindung ist es, den Leistungsumfang eines Navigationssystems insbesondere im Hinblick auf den Funktionsumfang, den Benutzerkomfort, die Betriebssicherheit und/oder die Qualität der Routenberechnung zu erhöhen.

Diese Aufgabe wird gelöst durch ein Verfahren zum Betrieb eines Navigationssystems gemäß der Lehre des unabhängigen Anspruchs 1, durch ein Computerprogramm gemäß der Lehre des unabhängigen Anspruchs 14 und durch ein Navigationssystem gemäß der Lehre des unabhängigen Anspruchs 15. Bevorzugte Ausführungsformen und Weiterbildungen der Erfindung sind Gegenstand der Unteransprüche.

Unter einem "Navigationssystem" im Sinne der Erfindung ist eine Vorrichtung zu verstehen, welche die Berechnung einer Route von einem Start zu einem Ziel ermöglicht. Vorzugsweise weist das Navigationssystem ein Positionierungssystem auf, etwa einen Empfänger für ein Satellitennavigationssystem wie GPS, Galileo oder GLONASS. Bevorzugt wird der Start und/oder das Ziel als räumliche Position angegeben, und insbesondere der Start als die aktuelle räumliche Position mittels des Positionierungssystems bestimmt. Bei einem Navigationssystem im Sinne der Erfindung erfolgt die Berechnung der Route unter Berücksichtigung eines oder mehrerer Optimierungskriterien, die verschieden gewichtet werden können.

Die Anwendung und/oder Gewichtung der Optimierungskriterien erfolgt dabei abhängig von einer, etwa durch einen Benutzer des Navigationssystems gewählten, Routenoption. Eine solche Routenoption kann insbesondere die Optimierung bezüglich der Fahrzeit, der Länge, der Energieeffizienz der Route betreffen. Auch die Optimierung im Hinblick auf eine landschaftlich besonders schöne oder interessante Route ist denkbar. Insbesondere kann eine Routenoption im Sinne der Erfindung mehrere Optimierungskriterien und/oder deren Gewichtung zusammenfassen, um dem Benutzer eine begrenzte und damit überschaubare Auswahl an möglichen Routen von einem Start zu einem Ziel zu erlauben.

Unter einem "Fahrzeug" im Sinne der Erfindung ist jede Art von Fahrzeug zu verstehen, mittels dessen eine oder mehrere Personen und/oder Zuladung transportiert werden kann. Bevorzugt handelt es sich bei dem Fahrzeug um ein Landfahrzeug, das sich nur oder überwiegend an Land fortbewegt. Insbesondere ist ein Personenkraftwagen (PKW), ein Lastkraftwagen (LKW), ein Motorrad, ein Bus oder ein Anhänger zu einem der vorausgehend genannten Fahrzeuge ein Fahrzeug im Sinne der Erfindung. Überdies wird im Sinne der Erfindung ein Fahrzeug, das durch Maschinenkraft bewegt wird und insbesondere einen Motor aufweist, als Kraftfahrzeug bezeichnet.

Mit der erfindungsgemäßen Lösung lassen sich die vom Navigationssystem bereitgestellten, eigenen Routenoptionen um weitere Routenoptionen ergänzen, welche von der fahrzeugexternen Datenverarbeitungsvorrichtung bereitgestellt werden. Insbesondere können diese weiteren Routenoptionen ergänzt werden, ohne dass dazu ein Eingriff in das Navigationssystem, etwa in Form eines Updates für das Fahrzeug durch eine Werkstatt erforderlich ist. Dies ist insbesondere für einen Benutzer des Navigationssystems, etwa einen Fahrer des Fahrzeugs, komfortabler. So stehen dem Benutzer die zusätzlichen, von der fahrzeugexternen Datenverarbeitungsvorrichtung bereitgestellten Routenoptionen dynamisch zur Verfügung und können auch schneller angepasst werden, da diese Anpassung nur bei der fahrzeugexternen Datenverarbeitungsvorrichtung durchgeführt werden muss.

Auch ist es möglich, den Bedarf an Rechenleistung bei der fahrzeugexternen Datenverarbeitungsvorrichtung zu reduzieren, da nur jene Route berechnet wird, die tatsächlich mittels der entsprechenden Routenoption ausgewählt worden ist. So lässt sich eine große Anzahl und/oder Vielfalt von möglichen Routenoptionen und damit Routen bereitstellen.

Nachfolgend werden bevorzugte Ausführungsformen und Weiterbildungen des Verfahrens zum Betrieb eines Navigationssystems beschrieben, die jeweils, soweit dies technisch möglich ist und nicht ausdrücklich ausgeschlossen wird, beliebig miteinander kombiniert werden können.

Gemäß einer ersten bevorzugten Ausführungsform weist das Verfahren des Weiteren den folgenden Schritt auf: Bereitstellen eines oder mehrerer vorbestimmter Filterkriterien. Ein Vorteil davon kann darin liegen, dass eine möglicherweise große Anzahl an Routenoptionen anhand der Filterkriterien gefiltert, also insbesondere eingeschränkt werden kann. So wird es einem Benutzer ermöglicht, aus den Routenoptionen jene herauszufiltern, die für ihn besonders relevant sind.

Gemäß einer weiteren bevorzugten Ausführungsform des Verfahrens zum Betrieb eines Navigationssystems wird beim Senden des ersten Signals wenigstens eines der vorbestimmten Filterkriterien an die fahrzeugexterne Datenverarbeitungsvorrichtung gesendet. Dies ermöglicht eine Vorauswahl der von der fahrzeugexternen Datenverarbeitungsvorrichtung bereitgestellten, im zweiten Signal gekennzeichneten Routenoptionen. Auf diese Weise lassen sich Routenoption, welche das wenigstens eine vorbestimmte Filterkriterium nicht passieren, vorab herausfiltern. So lässt sich bei dem Navigationssystem und/oder bei der fahrzeugexternen Datenverarbeitungsvorrichtung die benötigte Rechenleistung reduzieren und/oder die übertragene Datenmenge des zweiten Signals verringern.

Gemäß einer weiteren bevorzugten Ausführungsform weist das Verfahren des Weiteren die folgenden Schritte auf. In einem weiteren Verfahrensschritt dieser Ausführungsform stellt das Navigationssystem eine Eingabeoption zur Auswahl wenigstens eines der vorbestimmten Filterkriterien durch einen Benutzer bereit und erfasst eine zugeordnete Eingabe des Benutzers. In einem weiteren Verfahrensschritt wird, falls wenigstens ein Filterkriterium ausgewählt worden ist, dieses als ein externes Filterkriterium gekennzeichnet. In dieser bevorzugten Ausführungsform werden nur solche Filterkriterien an die fahrzeugexterne Datenverarbeitungsvorrichtung gesendet, die als externe Filterkriterien gekennzeichnet sind. Insbesondere können eines oder mehrere der vorbestimmten Filterkriterien persönliche Daten betreffen. Auf diese Weise lässt sich ein verbesserter Schutz der persönlichen Daten erzielen. Zudem wird es dem Benutzer ermöglicht, selbst auszuwählen, welche Daten er als besonders schützenswert einstuft und welche somit nicht an die fahrzeugexterne Datenverarbeitungsvorrichtung gesendet werden sollen. Zusätzlich kann der Benutzer insbesondere auswählen, welche der vorbestimmten Filterkriterien als externe Filterkriterien an die fahrzeugexterne Datenverarbeitungsvorrichtung gesendet werden, um dieser eine Vorauswahl der von ihr bereitgestellten Routenoptionen zu ermöglichen.

Gemäß einer weiteren bevorzugten Ausführungsform weist das Verfahren des Weiteren den folgenden Verfahrensschritt auf: lokales Filtern der eigenen oder der im zweiten Signal gekennzeichneten Routenoptionen anhand wenigstens eines der vorbestimmten Filterkriterien mittels einer Datenverarbeitungseinrichtung des Navigationssystems. In dieser bevorzugten Ausführungsform werden nur die gefilterten Routenoptionen mittels der Ausgabeeinrichtung des Navigationssystems ausgegeben. Grundsätzlich wird bei dieser Ausgabe wenigstens eine der eigenen Routenoptionen sowie wenigstens einer der im zweiten Signal gekennzeichneten Routenoptionen ausgegeben. Allerdings ist es möglich, dass aufgrund des lokalen Filterns bei den gefilterten Routenoptionen keine eigene Routenoptionen oder keine dem zweiten Signal gekennzeichneten Routenoptionen für die Ausgabe verfügbar ist. In diesem Fall ist das lokale Filtern als ein Teil des Verfahrensschritts des Ausgebens der Routenoptionen zu verstehen. Hierbei wird sowohl wenigstens eine eigene als auch wenigstens eine der im zweiten Signal gekennzeichneten Routenoptionen bei der lokalen Filterung berücksichtigt und somit in diesem Sinne ausgegeben. Ein Vorteil dieser bevorzugten Ausführungsform kann darin liegen, dass es ermöglicht wird, das Filtern lokal, also im Navigationssystem durchzuführen. Insbesondere können die Routenoptionen auf diese Weise anhand wenigstens eines der vorbestimmten Filterkriterien gefiltert werden, ohne dass dieses Filterkriterium nach außen, d.h. insbesondere an die fahrzeugexterne Datenverarbeitungsvorrichtung gesendet wird.

Gemäß einer weiteren bevorzugten Ausführungsform weist das Verfahren des Weiteren die folgenden Schritte auf. In einem weiteren Verfahrensschritt stellt das Navigationssystem eine Eingabeoption zur Auswahl wenigstens eines der vorbestimmten Filterkriterien bereit und erfasst eine dieser Eingabeoption zugeordnete Eingabe. In einem weiteren Verfahrensschrittwird, falls wenigstens ein Filterkriterium ausgewählt worden ist, dieses als ein internes Filterkriterium gekennzeichnet. Dabei wird in dieser Ausführungsform das lokale Filtern nur anhand solcher Filterkriterien durchgeführt, welche als interne Filterkriterien gekennzeichnet sind. Auf diese vorteilhafte Weise wird es ermöglicht, wenigstens eines der vorbestimmten Filterkriterien auszuwählen, welches für das lokale Filtern verwendet wird. Umgekehrt ist möglich andere der vorbestimmten Filterkriterien vom lokalen Filtern auszuschlie-ßen. Insbesondere kann ein Benutzer die anschließend ausgegebenen Routenoptionen über das wenigstens eine interne Filterkriterium vor auswählen und so die Anzahl der ausgegebenen Routenoptionen reduzieren und/oder an seinen jeweiligen Bedarf anpassen. So wird eine Datenschutzkontrolle implementiert, die bevorzugt benutzerkonfigurierbar ist. Schließlich lässt sich die Qualität der Routenbestimmung erhöhen, da nur jene Routen über die jeweiligen Routenoptionen für die Auswahl ausgegeben werden, welche mittels der internen Filterkriterien zuvor ausgewählt worden sind.

Gemäß einer weiteren bevorzugten Ausführungsform des Verfahrens zum Betrieb eines Navigationssystems kennzeichnet wenigstens eines der vorbestimmten Filterkriterien eine technische Eigenschaft des Fahrzeugs. Derartige Filterkriterien oder technische Eigenschaft des Fahrzeugs können insbesondere sein: das Kennzeichen des Fahrzeugs, der Wagentyp - etwa Sportwagen, Cabrio, Geländewagen oder Transporter -, die Anzahl der Insassen, das Gewicht des Fahrzeugs, die Zuladung des Fahrzeugs, die Bereifung, die für den Antrieb zur Verfügung stehende Energiemenge - etwa der Füllstand des Tanks -, die Antriebsart - etwa Allradantrieb, Vorderradantrieb oder Hinterradantrieb -, und/oder eine Information darüber, ob ein Anhänger an das Fahrzeug angehängt ist und falls ja optional die Art oder der Typ des Anhängers. So lassen sich die ausgegebenen Routenoptionen an die technischen Eigenschaften des Fahrzeugs anpassen.

Gemäß einer weiteren bevorzugten Ausführungsform des Verfahrens wird in einem weiteren Verfahrensschritt wenigstens eines der vorbestimmten Filterkriterien, vorzugsweise von dem Fahrzeug, mittels einer Kommunikationsschnittstelle des Navigationssystems empfangen. Auf diese vorteilhafte Weise lassen sich vorbestimmte Filterkriterien bereitstellen, ohne dass ein Benutzer dazu eingreifen oder eine Eingabe machen muss. Dies kann insbesondere auch die Betriebssicherheit und/oder die Qualität einer später berechneten Route, welche auf der Auswahl einer zugeordneten Routenoption basiert, erhöhen.

Gemäß einer weiteren bevorzugten Ausführungsform des Verfahrens zum Betrieb eines Navigationssystems basiert wenigstens eines der vorbestimmten Filterkriterien auf einer Benutzungshistorie. Auf diese vorteilhafte Weise können die Routenoptionen abhängig von den vorangegangenen Eingaben des Benutzers gefiltert werden. So lassen sich besonders bevorzugte Routenoptionen erkennen, etwa solche die besonders häufig ausgewählt worden sind, und den Benutzer als Filterkriterium zur Verfügung stellen.

Gemäß einer weiteren bevorzugten Ausführungsform des Verfahrens wird in einem weiteren Verfahrensschritt eine Eingabeoption zur Sprachauswahl bereitgestellt. In einem weiteren Verfahrensschritt wird die Eingabe der Sprachauswahl erfasst und gespeichert. Bei dieser Ausführungsform sind die sprachbasierten Ausgaben an die ausgewählte Bedienungssprache angepasst. Insbesondere kann die Sprachauswahl auch bei der Herstellung eines Navigationssystems, welches mit einem Verfahren gemäß dieser Ausführungsform betrieben wird, erfolgen. Alternativ oder zusätzlich kann die Sprachauswahl durch einen Benutzer erfolgen. Auf diese vorteilhafte Weise lässt sich der Benutzerkomfort erhöhen und/oder sich eine sprachbasierte Ausgabe anpassen.

Gemäß einer weiteren bevorzugten Ausführungsform des Verfahrens zum Betrieb eines Navigationssystems stellt diese eine Benutzungshistorie bereit. Insbesondere wird diese anhand vorausgegangener Eingaben eines oder mehrerer Benutzer zur Auswahl von Routenoptionen generiert. Vorzugsweise wird die Benutzerhistorie über einen oder mehrere Durchgänge des Verfahrens zum Betrieb eines Navigationssystems und speziell dem Ausgeben der Routenoptionen sowie dem Erfassen wenigstens einer Eingabe des Benutzers zur Auswahl einer der ausgegebenen Routenoptionen generiert bzw. um eine Kennzeichnung der jeweiligen Eingabe erweitert. In einer ersten bevorzugten Variante dieser Ausführungsform wird dabei die Anzahl der Auswahl einer bestimmten Routenoption in der Benutzungshistorie gespeichert und daraufhin bereitgestellt. In einer alternativen oder zusätzlichen Variante dieser Ausführungsform wird die Häufigkeit der Auswahl einer bestimmten Routenoption über einen vorbestimmten Zeitraum ermittelt und daraufhin bereitgestellt. In einer zusätzlichen oder alternativen Variante dieser Ausführungsform wird in der Benutzungshistorie die chronologische Reihenfolge der Auswahl bestimmter Routenoptionen gespeichert und daraufhin bereitgestellt. Auf diese vorteilhafte Weise wird es ermöglicht, vorbestimmte Filterkriterien bereitzustellen, die widerspiegeln, welche Routenoptionen besonders häufig, besonders oft und/oder in einem bestimmten Zeitraum ausgewählt worden sind. So wird einem Benutzer ermöglicht, die Routenoptionen danach zu filtern, welche er, zumindest im Hinblick auf deren Auswahl, besonders bevorzugt.

Gemäß einer weiteren bevorzugten Ausführungsform weist das des Weiteren die folgenden Schritte auf. In einem weiteren Verfahrensschritt wird wenigstens eine Eingabe des Benutzers darüber erfasst, welche eine Bestätigung oder Ablehnung der Zuordnung der berechneten Route zu der ausgewählten Routenoption angibt. Falls die ausgewählte Routenoption eine der im zweiten Signal gekennzeichneten Routenoptionen ist, wird in einem weiteren Verfahrensschritt ein fünftes Signal an die fahrzeugexterne Datenverarbeitungsvorrichtung gesendet, welches die Bestätigung oder Ablehnung der Zuordnung der berechneten Route zu der ausgewählten Routenoption kennzeichnet. In einem alternativen oder zusätzlichen weiteren Verfahrensschritt, wobei das Navigationssystem eine Benutzungshistorie bereitstellt, speichert das Navigationssystem eine Kennzeichnung in der Benutzungshistorie über die Bestätigung oder Ablehnung der Zuordnung der berechneten Route zu der ausgewählten Routenoption. Basierend darauf lässt sich die Zuordnung anpassen. Insbesondere kann dabei in einer bevorzugten Variante dieser Ausführungsform das Navigationssystem ein vorbestimmtes Filterkriterium bereitstellen, welches eine oder mehrere in der Benutzungshistorie gespeicherte Kennzeichnungen der jeweiligen Bestätigung oder Ablehnung über die Zuordnung zwischen Routenoption und berechneter Route charakterisiert. So lassen sich etwa, besonders komfortabel für den Benutzer, jene Routenoptionen ausfiltern, deren Zuordnungen zur jeweils berechneten Route vom Benutzer abgelehnt worden sind.

Gemäß einer weiteren bevorzugten Ausführungsform des Verfahrens zum Betrieb eines Navigationssystems werden mittels des zweiten Signals bei wenigstens einer der von der fahrzeugexternen Datenverarbeitungsvorrichtung bereitgestellten Routenoptionen zugeordnete routenbezogene Daten übertragen. Der Inhalt dieser routenbezogenen Daten wird zumindest teilweise mittels der Ausgabeeinrichtung beim Ausgeben dieser Routenoption ausgegeben. Auf diese Weise lassen sich Informationen über die jeweilige Routenoption übertragen und das Navigationssystem kann diese Informationen oder zumindest einen Teil davon ausgeben. Insbesondere können solche Daten einen Routennamen und eine Routenbeschreibung aufweisen, welche ausgegeben werden können.

Gemäß einer bevorzugten Variante werden der Name und/oder die kurze Beschreibung der Routenoption in der ausgewählten und gespeicherten Bedienungssprache vom fahrzeuginternen Navigationssystem ausgegeben, sofern der Inhalt der routenbezogenen Daten des zweiten Signals die jeweiligen Inhalte in der ausgewählten Sprache enthält. Andernfalls erfolgt die Ausgabe in der Sprache, in weleher der jeweilige Teil des Inhalts vorliegt. Falls der jeweilige Teil des Inhalts in mehreren Sprachen, jedoch nicht in der ausgewählten Sprache vorliegt, erfolgt in einer bevorzugten Variante die Ausgabe in einer Default-Sprache, etwa Englisch oder Koreanisch. Zusätzlich oder alternativ wird die Routenoption durch eine graphische Darstellung, vorzugsweise ein Icon präsentiert.

So wird es einem Benutzer ermöglicht, etwa anhand der Routennamen, einen Überblick über die möglichen Routenoptionen und, etwa anhand der Routenbeschreibungen, zusätzliche Informationen über die jeweilige Routenoption, zu erhalten. Zudem können solche Daten insbesondere eine Routenkennung aufweisen, welche als Kennzeichnung der Routenoption im dritten Signal dienen kann. Sofern die Routennamen oder die Routenbeschreibungen eindeutig einer bestimmten, zu berechnenden Route zugeordnet sind, können auch diese als Kennzeichnung der Routenoption bzw. als Routenkennung dienen.

Im Sinne der Erfindung beziehen sich "ein erstes Signal" sowie "ein weiteres erstes Signal" jeweils auf ein solches Signal, das dem ersten Signal gemäß dem ersten Aspekt der Erfindung in seiner Art entspricht. Insbesondere kann ein weiteres erstes Signal zusätzlich zu dem ersten Signal von dem Navigationssystem an die fahrzeugexterne Datenverarbeitungsvorrichtung oder an eine weitere fahrzeugexterne Datenverarbeitungsvorrichtung gesendet werden. Darüber hinaus kann das erste Signal von einem fahrzeugexternen System auch gesendet werden, etwa um mittels des fahrzeugexternen Systems für das Fahrzeug bzw. dessen Navigationssystem eine Routenoption anzufordern.

Dies gilt entsprechend auch für "ein zweites Signal", "ein weiteres zweites Signal", "ein drittes Signal", "ein weiteres drittes Signal", "ein viertes Signal" und "ein weiteres viertes Signal".

Gemäß einer weiteren bevorzugten Ausführungsform weist das des Weiteren die folgenden Schritte auf. In einem weiteren Verfahrensschritt sendet das Navigationssystem ein weiteres erstes Signal an eine weitere fahrzeugexterne Datenverarbeitungsvorrichtung. In einem weiteren Verfahrensschritt empfängt das Navigationssystem ein weiteres zweites Signal von der weiteren fahrzeugexternen Datenverarbeitungsvorrichtung. Beim Ausgeben der Routenoptionen wird des Weiteren wenigstens eine der im weiteren zweiten Signal gekennzeichneten Routenoptionen ausgegeben und somit eine Auswahl dieser ermöglicht. In einem weiteren Verfahrensschritt sendet das Navigationssystem, falls die ausgewählte Routenoption eine der im weiteren zweiten Signal gekennzeichneten Routenoptionen ist, ein weiteres drittes Signal an die weitere fahrzeugexterne Datenverarbeitungsvorrichtung und empfängt von dieser in noch einem weiteren Verfahrensschritt ein weiteres viertes Signal. Auf diese vorteilhafte Weise lassen sich wenigstens zwei fahrzeugexterne Datenverarbeitungsvorrichtungen, nämlich die fahrzeugexterne Datenverarbeitungsvorrichtung und die weitere fahrzeugexterne Datenverarbeitungsvorrichtung, zur Bereitstellung von Routenoptionen sowie der jeweiligen Berechnung der jeweils zugeordneten Routen nutzen. Insbesondere kann mit diesem erweiterten Funktionsumfang die Qualität und/oder die Auswahl an möglichen Routen erhöht werden. So kann etwa eine der wenigstens zwei fahrzeugexternen Datenverarbeitungsvorrichtungen insbesondere bei der Bereitstellung von Routenoptionen und der Berechnung der zugeordneten Routen, welche landschaftlich schöne oder interessante sein sollen, besonders gute Ergebnisse erzielen, während die andere besonders gute Ergebnisse bezüglich der schnellsten oder kürzestem Route erzielt.

In einer ersten bevorzugten Variante dieser Ausführungsform, welche auch eine Benutzungshistorie bereitstellt, wird insbesondere in dieser gespeichert, von welcher der wenigstens zwei fahrzeugexternen Datenverarbeitungsvorrichtungen die jeweils ausgewählte Routenoption bereitgestellt worden ist. Auf diese vorteilhafte Weise lassen sich die Routenoptionen mittels eines entsprechenden Filterkriteriums, welches insbesondere auf den jeweils erzielten Ergebnissen der fahrzeugexternen Datenverarbeitungsvorrichtungen bei der Bereitstellung und Berechnung der Routenoptionen bzw. Routen basiert, anhand der fahrzeugexternen Datenverarbeitungsvorrichtungen filtern.

Gemäß einer weiteren bevorzugten Ausführungsform des Verfahrens werden in einem weiteren Verfahrensschritt eine oder mehrere verfügbare fahrzeugexterne Datenverarbeitungsvorrichtung mittels eines Datenspeichers, welcher die jeweils verfügbaren fahrzeugexternen Datenverarbeitungsvorrichtung speichert, bestimmt. Dabei kann das Navigationssystem oder eine fahrzeugexterne Datenverarbeitungseinrichtung, insbesondere die fahrzeugexterne Datenverarbeitungsvorrichtung, diesen Datenspeicher aufweisen. So lässt sich eine effiziente (d.h. ohne Update des Navigationssystems) Anpassungsfähigkeit des fahrzuginternen Systems bezüglich der Fähigkeit einen Routenberechnungsauftrag der fahrzugexternen Datenverarbeitungsvorrichtungen zu erteilen sowie der Fähigkeit neue fahrzeugexterne Datenverarbeitungsvorrichtungen bereitzustellen, insbesondere auch ohne Eingabe der jeweiligen fahrzeugexternen Datenverarbeitungsvorrichtung durch den Benutzer, realisieren.

Gemäß einer weiteren bevorzugten Ausführungsform des Verfahrens wird in einem weiteren Verfahrensschritt die fahrzeugexterne Datenverarbeitungsvorrichtung bzw. werden die verfügbaren fahrzeugexternen Datenverarbeitungsvorrichtungen mittels der Ausgabeeinrichtung ausgegeben. In einer bevorzugten Variante erfolgt die Ausgabe mittels Anzeige des jeweiligen Namens der fahrzeugexternen Datenverarbeitungsvorrichtung und/oder mittels Anzeige einer kurzen Beschreibung des jeweiligen Optimierungskriteriums, etwa Fahrtzeit, Streckenlänge, Mautkosten. Zusätzlich oder alternativ erfolgt die Ausgabe mittels eines Icon, welches die jeweilige fahrzeugexterne Datenverarbeitungsvorrichtung kennzeichnet. Auf diese vorteilhafte Weise lassen sich der Benutzerkomfort erhöhen und/oder die fahrzeugexternen Datenverarbeitungsvorrichtung im fahrzeuginternen Navigationssystem und/oder mit diesem integriert präsentieren.

Gemäß einer weiteren bevorzugten Ausführungsform des Verfahren zum Betrieb eines Navigationssystems, wobei dieses Landkartendaten speichert und bereitstellt, weist dieses des Weiteren den folgenden Verfahrensschritt auf: Vergleichen der berechneten Route mit den Landkartendaten. Insbesondere lässt sich so die Betriebssicherheit erhöhen, da insbesondere fehlerhafte Routen, welche nicht mit den Landkartendaten in Übereinstimmung gebracht werden können, als solche erkannt werden können.

Gemäß einer weiteren bevorzugten Ausführungsform des Verfahrens wird bei dem Ausgeben der berechneten Route diese über die im Navigationssystem gespeicherten Landkartendaten überlagert. So lässt sich ein erhöhter Benutzerkomfort erzielen.

Gemäß einer weiteren bevorzugten Ausführungsform weist das Verfahren des Weiteren den folgenden Schritt auf: Erkennen des Benutzers des Navigationssystems bzw. des Fahrers des Fahrzeugs. Bei dieser bevorzugten Ausführungsform werden die vorbestimmten Filterkriterien zumindest teilweise benutzerspezifisch bereitgestellt. Insbesondere solche vorbestimmten Filterkriterien, welche die Benutzungshistorie betreffen, werden benutzerspezifisch bereitgestellt. Auch kann die Auswahl und Kennzeichnung als internes oder externes Filterkriterium benutzerspezifisch sein. Überdies lassen sich Daten über den jeweiligen Benutzer, etwa dessen Erlaubnis bestimmte Straßen oder ein bestimmtes Gelände zu befahren, dessen Gesundheitsstatus oder dessen Empfindlichkeit für Reiseübelkeit, als vorbestimmte Filterkriterien, vorzugsweise als interne Filterkriterien, bereitstellen. Auf diese Weise lässt sich ein verbesserter Benutzerkomfort und/oder eine erhöhte Betriebssicherheit erzielen.

Ein zweiter Aspekt der Erfindung betrifft ein Computerprogramm, insbesondere für ein Navigationssystem, mit einem Programmcode zur Durchführung eines Verfahrens gemäß dem ersten Aspekt der Erfindung. Die bereits vorausgehend genannten Ausführungsformen und Weiterbildungen sowie möglichen Vorteile des ersten Aspekts der Erfindung gelten entsprechend auch für das erfindungsgemäße Computerprogramm.

Ein dritter Aspekt Erfindung betrifft ein Navigationssystem für ein Fahrzeug und insbesondere für ein Kraftfahrzeug, das eingerichtet ist, ein Verfahren gemäß dem ersten Aspekt der Erfindung auszuführen.

Unter "eingerichtet" im Sinne der Erfindung ist zu verstehen, dass die entsprechende Vorrichtung bereits eingestellt oder einstellbar - d.h. konfigurierbar - ist, eine bestimmte Funktion zu erfüllen. Die Konfiguration kann dabei beispielsweise über eine entsprechende Einstellung von Parametern eines Prozessablaufs oder von Schaltern oder ähnlichem zur Aktivierung von Funktionalitäten bzw. Einstellungen erfolgen.

Die bereits vorausgehend genannten Ausführungsformen und Weiterbildungen sowie möglichen Vorteile des ersten Aspekts der Erfindung gelten entsprechend auch für das erfindungsgemäße Navigationssystem.

Weitere Vorteile, Merkmale und Anwendungsmöglichkeiten der vorliegenden Erfindung ergeben sich aus der nachfolgenden detaillierten Beschreibung im Zusammenhang mit den Figuren.

Dabei zeigt
- **Fig. 1**: ein Flussdiagramm zur Veranschaulichung einer Ausführungsform des erfindungsgemäßen Verfahrens zum Betrieb eines Navigationssystems;
- **Fig. 2**: ein Flussdiagramm zur Veranschaulichung des Bereitstellens, der Auswahl und des Kennzeichnens der Filterkriterien als interne oder externe Filterkriterien bei der Ausführungsform des erfindungsgemäßen Verfahrens zum Betrieb eines Navigationssystems; und
- **Fig. 3**: schematisch eine Ausführungsform des erfindungsgemäßen Navigationssystems zusammen mit einer fahrzeugexternen Datenverarbeitungsvorrichtung.

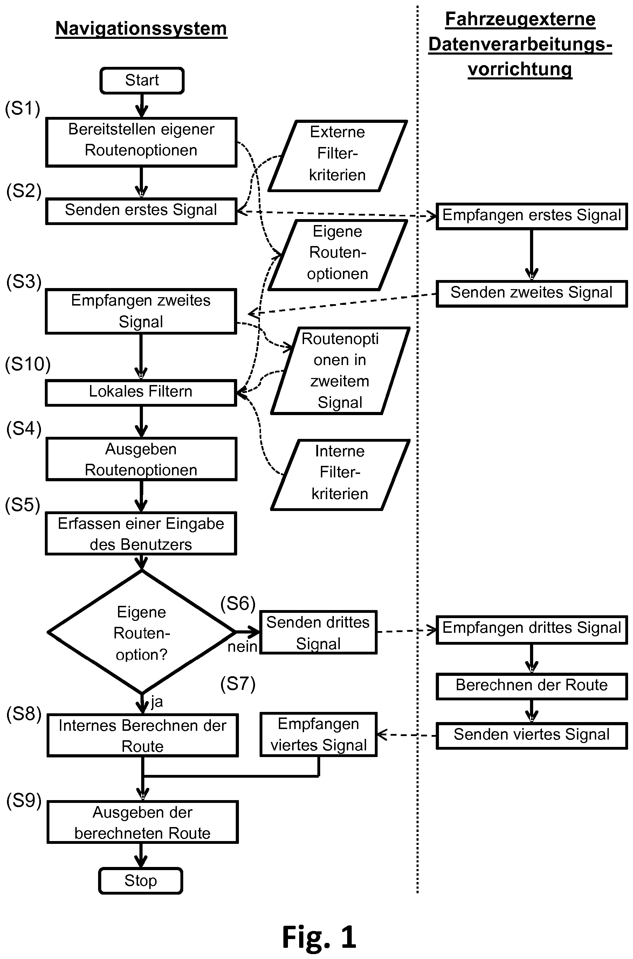

In **Fig. 1** ist ein Flussdiagramm zur Veranschaulichung einer Ausführungsform des erfindungsgemäßen Verfahrens zum Betrieb eines Navigationssystems 1 eines Fahrzeugs dargestellt. Dabei kommuniziert das Navigationssystem 1 mit einer fahrzeugexternen Datenverarbeitungsvorrichtung 3. Für eine bessere Verständlichkeit sind auch die bei der fahrzeugexternen Datenverarbeitungsvorrichtung 3 ausgeführten Verfahrensschritte skizziert.

Im Verfahrensschritt S1 stellt das Navigationssystem eine oder mehrere eigene Routenoptionen 2 bereit. Dies sind vorzugsweise die werkseitig festgelegten Routenoptionen: "schnelle Route", "kurze Route" und "kraftstoffsparende Route".

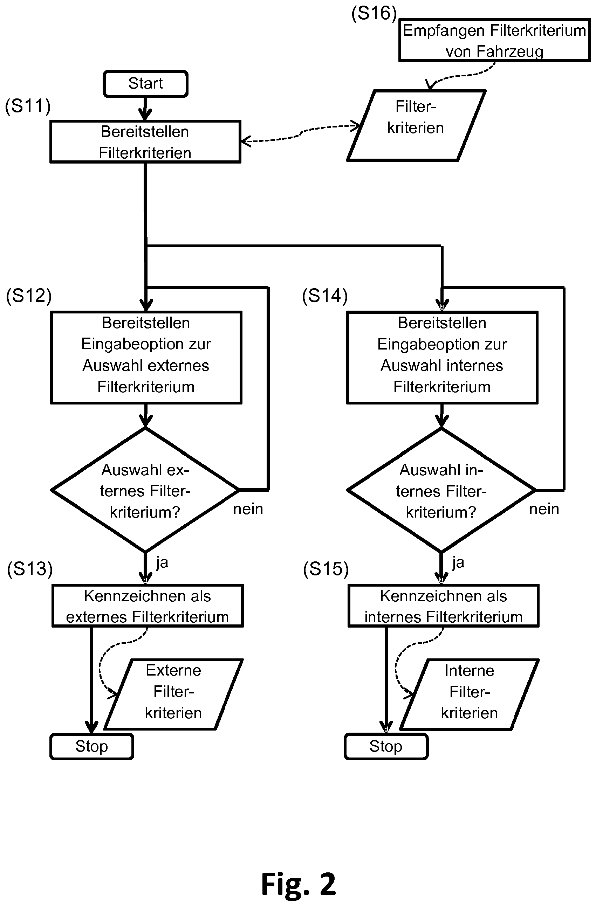

Im Verfahrensschritt S2 sendet das Navigationssystem 1 ein erstes Signal m1 an die fahrzeugexterne Datenverarbeitungsvorrichtung 3 zur Anforderung einer oder mehrerer Routenoptionen. Dabei wird eine Kennung des Navigationssystems 1, insbesondere eine IP-Adresse des Navigationssystems 1, und wenigstens ein externes Filterkriterium 8 gesendet, um eine gezielte Antwort der fahrzeugexternen Datenverarbeitungsvorrichtung 3 bzw. eine Vorauswahl der von der fahrzeugexternen Datenverarbeitungsvorrichtung 3 bereitgestellten Routenoptionen zu ermöglichen. Für das externe Filterkriterium 8 wird auf die Beschreibung bezüglich **Fig. 2** verwiesen. Bei der hier beschriebenen Ausführungsform ist ein solches externes Filterkriterium 8 die Antriebsart, also etwa Vorderrad-, Hinterrad- oder Allradantrieb, des Fahrzeugs.

Daraufhin empfängt die fahrzeugexterne Datenverarbeitungsvorrichtung 3 das erste Signal m1 und sendet ein zweites Signal m2, insbesondere gezielt an das Navigationssystem 1.

Im Verfahrensschritt S3 empfängt das Navigationssystem 1 das zweite Signal m2, welches eine oder mehrere von der fahrzeugexternen Datenverarbeitungsvorrichtung 3 zur Routenberechnung bereitgestellten Routenoptionen 4 kennzeichnet.

Im Verfahrensschritt S10 werden sowohl die eigenen Routenoptionen 2 als auch die im zweiten Signal m2 gekennzeichneten Routenoptionen 4 mittels einer Datenverarbeitungseinrichtung 10 des Navigationssystems 1 anhand wenigstens eines internen Filterkriteriums 9 lokal gefiltert. Für das interne Filterkriterium 9 wird auf die Beschreibung bezüglich **Fig. 2** verwiesen. Bei der hier beschriebenen Ausführungsform ist ein solches internes Filterkriterium 9 das Kennzeichen des Fahrzeugs.

Im Verfahrensschritt S4 werden die gefilterten Routenoptionen mittels einer Ausgabeeinrichtung 5 des Navigationssystems 1 ausgegeben. Dabei wird jeweils wenigstens eine eigene Routenoption 2 und wenigstens eine der im zweiten Signal m2 gekennzeichneten Routenoptionen 4 ausgegeben, sofern nicht alle eigenen Routenoptionen bzw. nicht alle im zweiten Signal m2 gekennzeichneten Routenoptionen bei der lokalen Filterung S10 herausgefiltert wurden. Vorzugsweise kann die Ausgabeeinrichtung 5 eine grafische Anzeigeeinheit 5 sein. Alternativ oder zusätzlich können die Routenoptionen auch akustisch ausgegeben werden.

Daraufhin wird im Verfahrensschritt S5 wenigstens eine Eingabe des Benutzers des Navigationssystems 1 zur Auswahl einer der ausgegebenen Routenoptionen erfasst. Vorzugsweise kann dies durch Erfassung der Berührung der grafischen Anzeigeeinheit 5, welche einen berührungsempfindlichen Bildschirm aufweist, durchgeführt werden. Dabei wird jene der ausgegebenen Routenoption ausgewählt, welche zumindest am Ort der Berührung des berührungsempfindlichen Bildschirms durch den Benutzer ausgegeben worden ist.

Anschließend wird festgestellt, ob die ausgewählte Routenoption eine eigene Routenoption 2 des Navigationssystems 1 oder eine der im zweiten Signal gekennzeichneten Routenoptionen 4 ist.

Falls die ausgewählte Routenoption eine der im zweiten Signal gekennzeichneten Routenoptionen ist, sendet das Navigationssystem 1 im Verfahrensschritt S6 ein drittes Signal m3 an die fahrzeugexterne Datenverarbeitungsvorrichtung 3, wobei das dritte Signal m3 die ausgewählte Routenoption kennzeichnet. Die fahrzeugexterne Datenverarbeitungsvorrichtung 3 empfängt das dritte Signal m3, berechnet eine Route 6, welche der ausgewählten Routenoption zugeordnet ist, und sendet ein viertes Signal m4 an das Navigationssystem 1. Dieses empfängt im Verfahrensschritt S7 das viertes Signal m4.

Falls die ausgewählte Routenoption eine eigene Routenoption 2 ist, berechnet das Navigationssystem 1 im Verfahrensschritt S8 eine Route 6, welche der ausgewählten Routenoption zugeordnet ist.

Nach dem Verfahrensschritt S7 bzw. S8 wird die berechnete Route 6 mittels der Ausgabeeinrichtung 5 des Navigationssystems im Verfahrensschritt S9 ausgegeben.

In **Fig. 2** ist ein Flussdiagramm zur Veranschaulichung von Optionen des Verfahrens des Bereitstellens, der Auswahl und des Kennzeichnens der Filterkriterien als interne oder externe Filterkriterien bei der Ausführungsform des erfindungsgemäßen Verfahrens zum Betrieb eines Navigationssystems dargestellt.

Im Verfahrensschritt S11 stellt das Navigationssystem 1 eines oder mehrere vorbestimmte Filterkriterien 7 bereit. In dieser Ausführungsform sind die vorbestimmten Filterkriterien 7 zumindest: die Antriebsart, das Kennzeichen, die für den Antrieb verfügbare Energiemenge, insbesondere der Füllstand des Tanks, und die Anzahl der Insassen des Fahrzeugs 1.

Dabei kann das Navigationssystem im Verfahrensschritt S16 die für den Antrieb verfügbare Energiemenge 7 von dem Fahrzeug 1 mittels einer Kommunikationsschnittstelle 11 empfangen.

Im Verfahrensschritt S12 stellt das Navigationssystem eine Eingabeoption zur Auswahl darüber bereit, ob wenigstens eines der vorbestimmten Filterkriterien 7 ein externes Filterkriterium 8 sein soll, und erfasst eine zugeordnete Eingabe. Falls wenigstens eines der vorbestimmten Filterkriterien 7 ausgewählt worden ist, wird im Verfahrensschritt S13 dieses ausgewählte Filterkriterium als ein externes Filterkriterium 8 gekennzeichnet. So kann etwa die Antriebsart des Fahrzeugs als externes Filterkriterium gekennzeichnet werden und somit an die fahrzeugexterne Datenverarbeitungsvorrichtung 3 im Verfahrensschritt S2 gesendet werden. Diesem ist es dann möglich, solche Routenoptionen bereitzustellen, die für die jeweilige Antriebsarten geeignet sind. So kann etwa eine landschaftlich schöne Route nur für einen Vierradantrieb geeignet sein.

Im Verfahrensschritt S14 stellt das Navigationssystem eine Eingabeoption zur Auswahl darüber bereit, ob wenigstens eines der vorbestimmten Filterkriterien 7 ein internes Filterkriterium 9 sein soll, und erfasst eine zugeordnete Eingabe. Falls wenigstens eines der vorbestimmten Filterkriterien 7 ausgewählt worden ist, wird im Verfahrensschritt S15 dieses ausgewählte Filterkriterium als ein internes Filterkriterium 9 gekennzeichnet. Als ein solches internes Filterkriterium 9 kann das Kennzeichen des Fahrzeugs 1 ausgewählt sein. Dieses ist insbesondere dann relevant, wenn, etwa aufgrund von gesetzlichen Vorschriften zum Umweltschutz oder zur Verkehrsberuhigung, nur Fahrzeuge mit bestimmten Kennzeichen, etwa eine gerade oder ungerade letzte Ziffer des Kennzeichens, eine bestimmte Straße befahren dürfen. So lässt sich einerseits die Filterung der Routenoptionen nach einem solchen Filterkriterium realisieren und andererseits der Schutz der persönlichen Daten erhöhen.

Auch kann es wünschenswert sein, andere vorbestimmte Filterkriterien 7 weder als interne Filterkriterien 9 noch als externe Filterkriterien 8 zu verwenden, also die Routenoptionen nicht mit diesen einzuschränken. Bei dieser Ausführungsform ist dies insbesondere für die Anzahl der Insassen und die für den Antrieb zur Verfügung stehende Energiemenge der Fall.

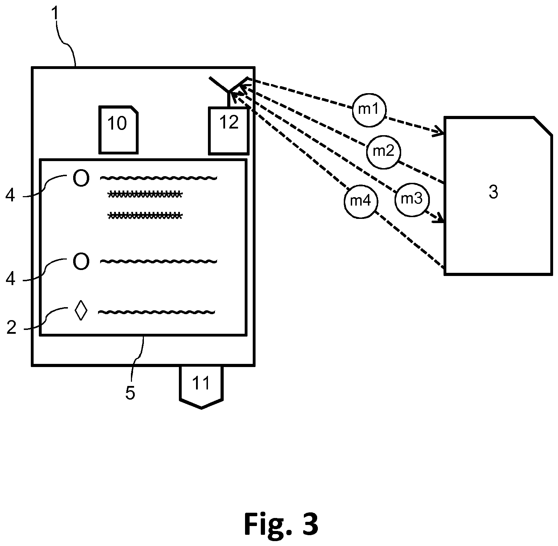

In **Fig. 3** stellt schematisch eine Ausführungsform des erfindungsgemäßen Navigationssystems 1 dar. Sie ist eingerichtet, das Verfahren zum Betrieb eines Navigationssystems gemäß der Fig. 1 und 2 auszuführen, zusammen mit der fahrzeugexternen Datenverarbeitungsvorrichtung 3 dargestellt. Dazu weist das Navigationssystem 1 eine Ausgabeeinrichtung 5, eine Datenverarbeitungseinrichtung 10, eine Kommunikationsschnittstelle 11 zur Kommunikation mit dem Fahrzeug und eine Kommunikationseinrichtung 12 auf.

Die Kommunikationseinrichtung 12 ist eingerichtet, das erste Signal m1 an die fahrzeugexterne Datenverarbeitungsvorrichtung 3 zu senden und das zweite Signal m2 von dieser zu empfangen. Dieses zweite Signal m2 überträgt jeweils wenigstens einen der jeweiligen Routenoption zugeordneten Datensatz, welcher eine Routenkennung, einem Routennamen und eine Routenbeschreibung aufweist. Sofern die Routennamen eindeutig eine bestimmte Route zuordnen, können diese auch als Routenkennung dienen. In diesem Fall weist der Datensatz also kein zusätzliches Feld für die Routenkennung auf. Dies ist in ähnlicher Weise auch für die Routenbeschreibung möglich.

Die Ausgabeeinrichtung 5 ist ein berührungsempfindlicher Bildschirm 5, welcher zwei im zweiten Signal m2 gekennzeichneten Routenoptionen 4 und eine eigene Routenoption 2 anzeigt.

Es versteht sich, dass auch noch weitere, hier nicht dargestellte Routenoptionen 2,4 als ausgegeben zu betrachten sind, welche jedoch aufgrund der Größe des berührungsempfindlichen Bildschirms 5 nicht alle zugleich physisch dargestellt werden können. In diesem Fall kann jeweils ein Teil der Routenoptionen mittels eines Bildlauf-Mechanismus dargestellt werden. Zudem können die dargestellten Routenoptionen 2, 4 zuvor gefiltert worden sein.

**Fig. 3** illustriert die visuelle Ausgabe der jeweiligen Routenoption 2, 4, wobei der jeweilige Routenname, also der Name bzw. die Bezeichnung der jeweiligen Routenoption, am berührungsempfindlichen Bildschirm 5 dargestellt ist. Bei der oberen der beiden im zweiten Signal m2 gekennzeichneten Routenoptionen 4 ist zusätzlich zum Routennamen die Routenbeschreibung dieser Routenoption visuell ausgegeben. Auf diese Weise kann der Benutzer, etwa durch Anwählen der jeweiligen Routenoption 2, 4, weitere Informationen über die jeweilige Routenoption 2, 4 erhalten.

Schließlich ist die Kommunikationseinrichtung 12 eingerichtet, das dritte Signal m3 an die fahrzeugexterne Datenverarbeitungsvorrichtung 3 zu senden und von dieser das vierte Signal m4 zu empfangen. Dabei kann die Kennzeichnung der ausgewählten Routenoption im dritten Signal m3 mittels ihrer Routenkennung erfolgen.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung in dessen einer beispielhaften Ausführungsform liefern, wobei es sich versteht, dass verschiedene Änderungen in der Funktionsweise und der Anordnung der in einer beispielhaften Ausführung beschriebenen Elemente vorgenommen werden können, ohne dass dabei von dem in den angehängten Ansprüchen jeweils festgelegten Gegenstand abgewichen wird.

### Bezugszeichenliste

- 1: Navigationssystem
- 2: eine oder mehrere eigene Routenoptionen
- 3: fahrzeugexterne Datenverarbeitungsvorrichtung
- 4: eine oder mehrere im zweiten Signal gekennzeichneten Routenoptionen
- 5: Ausgabeeinrichtung des Navigationssystems
- 6: berechnete Route
- 7: eines oder mehrere vorbestimmte Filterkriterien
- 8: eines oder mehrere externe Filterkriterien
- 9: eines oder mehrere interne Filterkriterien
- 10: Datenverarbeitungseinrichtung des Navigationssystems
- 11: Kommunikationsschnittstelle des Navigationssystems zur Kommunikation mit dem Fahrzeug
- 12: Kommunikationseinrichtung des Navigationssystems
- m1: erstes Signal
- m2: zweites Signal
- m3: drittes Signal
- m4: viertes Signal

## Patentansprüche

1. Verfahren zum Betrieb eines Navigationssystems (1) eines Fahrzeugs, aufweisend die folgenden Verfahrensschritte:
- Bereitstellen (S1) einer oder mehrerer eigener Routenoptionen (2) zur Routenberechnung durch das Navigationssystem (1);
- Senden (S2) eines ersten Signals (m1) an eine fahrzeugexterne Datenverarbeitungsvorrichtung (3) zur Anforderung einer oder mehrerer durch die fahrzeugexterne Datenverarbeitungsvorrichtung (3) bereitgestellte Routenoptionen zur Routenberechnung durch die fahrzeugexterne Datenverarbeitungsvorrichtung (3);
- Empfangen (S3) eines zweiten Signals (m2) von der fahrzeugexternen Datenverarbeitungsvorrichtung (3), welches eine oder mehrere von der fahrzeugexternen Datenverarbeitungsvorrichtung (3) zur Routenberechnung bereitgestellten Routenoptionen (4) kennzeichnet;
- Ausgeben (S4) wenigstens einer der eigenen Routenoptionen (2) sowie wenigstens einer der im zweiten Signal gekennzeichneten Routenoptionen (4) mittels einer Ausgabeeinrichtung (5) des Navigationssystems (1), um einem Benutzer eine Auswahl unter der ausgegebenen wenigstens einen der eigenen Routenoptionen (2) sowie der ausgegebenen wenigstens einen der im zweiten Signal gekennzeichneten Routenoptionen (4) zu ermöglichen;
- Erfassen (S5) wenigstens einer Eingabe des Benutzers des Navigationssystems (1) zur Auswahl einer der ausgegebenen Routenoptionen;
- falls die ausgewählte Routenoption eine der im zweiten Signal (m2) gekennzeichneten Routenoptionen (4) ist, Senden (S6) eines dritten Signals (m3), welches diese ausgewählte Routenoption kennzeichnet, an die fahrzeugexterne Datenverarbeitungsvorrichtung (3) und Empfangen (S7) eines vierten Signals (m4) von der fahrzeugexternen Datenverarbeitungsvorrichtung (3), welches eine der ausgewählten Routenoption zugeordnete und von der fahrzeugexternen Datenverarbeitungsvorrichtung (3) berechnete Route (6) kennzeichnet;
- falls die ausgewählte Routenoption eine der eigenen Routenoptionen (2) ist, Berechnen (S8) einer dieser Routenoption zugeordneten Route (6); und
- Ausgeben (S9) der berechneten Route (6) mittels der Ausgabeeinrichtung (5) des Navigationssystems (1),
wobei das Navigationssystem (1) bzw. die fahrzeugexterne Datenverarbeitungsvorrichtung (3) eingerichtet ist, die Route (6) anhand eines Starts und Ziels zu berechnen.

2. Verfahren gemäß Anspruch 1, des Weiteren aufweisend den Verfahrensschritt:
- Bereitstellen (S11) eines oder mehrerer vorbestimmter Filterkriterien (7), um ein Filtern von Routenoptionen (2, 4) zu ermöglichen.

3. Verfahren gemäß Anspruch 2, wobei beim Senden (S2) des ersten Signals (m1) wenigstens eines der vorbestimmten Filterkriterien (7) an die fahrzeugexterne Datenverarbeitungsvorrichtung (3) gesendet wird, um eine Vorauswahl der von der fahrzeugexternen Datenverarbeitungsvorrichtung (3) bereitgestellten, im zweiten Signal (m2) gekennzeichneten Routenoptionen (4) zu ermöglichen.

4. Verfahren gemäß Anspruch 3, des Weiteren aufweisend die folgenden Verfahrensschritte:
- Bereitstellen einer Eingabeoption zur Auswahl wenigstens eines der vorbestimmten Filterkriterien durch einen Benutzer als ein externes Filterkriterium und Erfassen (S12) einer zugeordneten Eingabe des Benutzers; und
- falls wenigstens ein Filterkriterium ausgewählt worden ist, Kennzeichnen (S13) dieses ausgewählten Filterkriteriums als ein externes Filterkriterium; und
wobei nur solche Filterkriterien an die fahrzeugexterne Datenverarbeitungsvorrichtung gesendet werden (S2), die als externe Filterkriterien (8) gekennzeichnet sind.

5. Verfahren gemäß einem der Ansprüche 2 bis 4, des Weiteren aufweisend den Verfahrensschritt:
- lokales Filtern (S10) der eigenen oder der im zweiten Signal (m2) gekennzeichneten Routenoptionen (2, 4) anhand wenigstens eines der vorbestimmten Filterkriterien (7, 9) mittels einer Datenverarbeitungseinrichtung (10) des Navigationssystems (1); und
wobei nur die gefilterten Routenoptionen ausgegeben (S4) werden.

6. Verfahren gemäß Anspruch 5, des Weiteren aufweisend die folgenden Verfahrensschritte:
- Bereitstellen einer Eingabeoption zur Auswahl wenigstens eines der vorbestimmten Filterkriterien (7) als ein internes Filterkriterium (9) und Erfassen (S14) einer zugeordneten Eingabe;
- falls wenigstens ein Filterkriterium ausgewählt worden ist, Kennzeichnen (S15) dieses ausgewählten Filterkriteriums als ein internes Filterkriterium (9);
wobei nur anhand solcher Filterkriterien (7, 9) lokal gefiltert wird (S10), welche als interne Filterkriterien (9) gekennzeichnet sind.

7. Verfahren gemäß einem der Ansprüche 2 bis 6, wobei wenigstens eines der vorbestimmten Filterkriterien (7, 8, 9) eine technische Eigenschaft des Fahrzeugs kennzeichnet.

8. Verfahren gemäß einem der Ansprüche 2 bis 7, des Weiteren aufweisend den Verfahrensschritt:
- Empfangen (S16) wenigstens eines der vorbestimmten Filterkriterien (7, 8, 9) mittels einer Kommunikationsschnittstelle (11) des Navigationssystems (1).

9. Verfahren gemäß einem der Ansprüche 2 bis 8, wobei wenigstens eines der vorbestimmten Filterkriterien (7, 8, 9) auf einer Benutzungshistorie basiert.

10. Verfahren gemäß Anspruch 9, des Weiteren aufweisend den Verfahrensschritt:
- Bereitstellen der Benutzungshistorie, welche anhand vorausgegangener Eingaben eines Benutzers zur Auswahl von Routenoptionen generiert wird.

11. Verfahren gemäß einem der vorhergehenden Ansprüche, des Weiteren aufweisend die Verfahrensschritte:
- Erfassen wenigstens einer Eingabe des Benutzers, welche eine Bestätigung oder Ablehnung der Zuordnung der berechneten Route (6) zu der ausgewählten Routenoption angibt; und
- Speichern einer Kennzeichnung in einer bereitgestellten Benutzungshistorie über die Bestätigung oder Ablehnung der Zuordnung der berechneten Route (6) zu der ausgewählten Routenoption; oder
- falls die ausgewählte Routenoption eine der im zweiten Signal gekennzeichneten Routenoptionen (4) ist, Senden eines fünften Signals an die fahrzeugexterne Datenverarbeitungsvorrichtung (3), welches die Bestätigung oder Ablehnung der Zuordnung der berechneten Route (6) zu der ausgewählten Routenoption kennzeichnet.

12. Verfahren gemäß einem der vorhergehenden Ansprüche,
wobei:
mittels des zweiten Signals (m2) bei wenigstens einer der von der fahrzeugexternen Datenverarbeitungsvorrichtung (3) bereitgestellten Routenoptionen (4) zugeordnete Daten übertragen werden; und
beim Ausgeben (S4) dieser Routenoption der Inhalt der zugeordneten Daten zumindest teilweise mittels der Ausgabeeinrichtung (5) ausgegeben wird.

13. Verfahren gemäß einem der vorhergehenden Ansprüche, des Weiteren aufweisend die Verfahrensschritte:
- Senden eines weiteren ersten Signals an eine weitere fahrzeugexterne Datenverarbeitungsvorrichtung;
- Empfangen eines weiteren zweiten Signals von der weiteren fahrzeugexternen Datenverarbeitungsvorrichtung; und
wobei:
beim Ausgeben der Routenoptionen (S4) des Weiteren wenigstens eine der im weiteren zweiten Signal gekennzeichneten Routenoptionen ausgegeben wird; und
falls die ausgewählte Routenoption eine der im weiteren zweiten Signal gekennzeichneten Routenoptionen ist, Senden eines weiteren dritten Signals an die weitere fahrzeugexterne Datenverarbeitungsvorrichtung und Empfangen eines weiteren vierten Signals, welches die weitere fahrzeugexterne Datenverarbeitungsvorrichtung sendet.

14. Computerprogramm, insbesondere für ein Navigationssystem (1), mit einem Programmcode zur Durchführung eines Verfahrens gemäß einem der vorhergehenden Ansprüche.

15. Navigationssystem (1) für ein Fahrzeug, insbesondere für ein Kraftfahrzeug, wobei das Navigationssystem (1) eingerichtet ist, ein Verfahren gemäß einem der Ansprüche 1 bis 13 auszuführen.

## Claims

1. Method for operating a navigation system (1) of a vehicle, comprising the following method steps:
- providing (S1) one or more dedicated route options (2) for route calculation by the navigation system (1);
- transmitting (S2) a first signal (m1) to a vehicle-external data processing device (3) for requesting one or more route options provided by the vehicle-external data processing device (3) for route calculation by the vehicle-external data processing device (3);
- receiving (S3) a second signal (m2) from the vehicle-external data processing device (3), said second signal identifying one or more route options (4) provided by the vehicle-external data processing device (3) for route calculation;
- outputting (S4) at least one of the dedicated route options (2) and at least one of the route options (4) identified in the second signal by means of an output unit (5) of the navigation system (1) in order to make it possible for a user to select from those output at least one of the dedicated route options (2) and from those output at least one of the route options (4) identified in the second signal;
- detecting (S5) at least one input of the user of the navigation system (1) for selecting one of the route options output;
- if the selected route option is one of the route options (4) identified in the second signal (m2), transmitting (S6) a third signal (m3), which identifies said selected route option, to the vehicle-external data processing device (3) and receiving (S7) a fourth signal (m4) from the vehicle-external data processing device (3), said fourth signal identifying a route (6) assigned to the selected route option and calculated by the vehicle-external data processing device (3);
- if the selected route option is one of the dedicated route options (2), calculating (S8) a route (6) assigned to this route option; and
- outputting (S9) the calculated route (6) by means of the output unit (5) of the navigation system (1), wherein the navigation system (1) or the vehicle-external data processing device (3) is configured to calculate the route (6) based on a start and destination.

2. Method according to Claim 1, furthermore comprising the following method step:
- providing (S11) one or more predetermined filter criteria (7) in order to make it possible to filter route options (2, 4).

3. Method according to Claim 2, wherein, during the process of transmitting (S2) the first signal (m1), at least one of the predetermined filter criteria (7) is transmitted to the vehicle-external data processing device (3) in order to enable a pre-selection of the route options (4) provided by the vehicle-external data processing device (3) and identified in the second signal (m2) .

4. Method according to Claim 3, furthermore comprising the following method steps:
- providing an input option for selecting at least one of the predetermined filter criteria by means of a user as an external filter criterion and detecting (S12) an assigned input of the user; and
- if at least one filter criterion has been selected, identifying (S13) this selected filter criterion as an external filter criterion; and
wherein only such filter criteria which are identified as external filter criteria (8) are transmitted (S2) to the vehicle-external data processing device.

5. Method according to any of Claims 2 to 4, furthermore comprising the following method step:
- locally filtering (S10) the dedicated route options (2) or the route options (4) identified in the second signal (m2) on the basis of at least one of the predetermined filter criteria (7, 9) by means of a data processing unit (10) of the navigation system (1); and
wherein only the filtered route options are output (S4).

6. Method according to Claim 5, furthermore comprising the following method steps:
- providing an input option for selecting at least one of the predetermined filter criteria (7) as an internal filter criterion (9) and detecting (S14) an assigned input;
- if at least one filter criterion has been selected, identifying (S15) this selected filter criterion as an internal filter criterion (9);
wherein the process of local filtering (S10) is carried out only on the basis of such filter criteria (7, 9) which are identified as internal filter criteria (9).

7. Method according to any of Claims 2 to 6, wherein at least one of the predetermined filter criteria (7, 8, 9) identifies a technical property of the vehicle.

8. Method according to any of Claims 2 to 7, furthermore comprising the following method step:
- receiving (S16) at least one of the predetermined filter criteria (7, 8, 9) by means of a communication interface (11) of the navigation system (1).

9. Method according to any of Claims 2 to 8, wherein at least one of the predetermined filter criteria (7, 8, 9) is based on a use history.

10. Method according to Claim 9, furthermore comprising the following method step:
- providing the use history, which is generated on the basis of previous inputs of a user for selecting route options.

11. Method according to any of the preceding claims, furthermore comprising the following method steps:
- detecting at least one input of the user which indicates a confirmation or rejection of the assignment of the calculated route (6) to the selected route option; and
- storing an identification in a provided use history about the confirmation or rejection of the assignment of the calculated route (6) to the selected route option; or
- if the selected route option is one of the route options (4) identified in the second signal, transmitting a fifth signal to the vehicle-external data processing device (3), said fifth signal identifying the confirmation or rejection of the assignment of the calculated route (6) to the selected route option.

12. Method according to any of the preceding claims, wherein:
by means of the second signal (m2) in the case of at least one of the route options (4) provided by the vehicle-external data processing device (3), assigned data are transferred; and
during the process of outputting (S4) this route option, the content of the assigned data is output at least partly by means of the output unit (5).

13. Method according to any of the preceding claims, furthermore comprising the following method steps:
- transmitting a further first signal to a further vehicle-external data processing device;
- receiving a further second signal from the further vehicle-external data processing device; and
wherein:
during the process of outputting the route options (S4), furthermore at least one of the route options identified in the further second signal is output; and
if the selected route option is one of the route options identified in the further second signal, transmitting a further third signal to the further vehicle-external data processing device and receiving a further fourth signal, which is transmitted by the further vehicle-external data processing device.

14. Computer program, in particular for a navigation system (1), comprising a program code for carrying out a method according to any of the preceding claims.

15. Navigation system (1) for a vehicle, in particular for a motor vehicle, wherein the navigation system (1) is configured to perform a method according to any of Claims 1 to 13.

## Revendications

1. Procédé permettant de faire fonctionner un système de navigation (1) d'un véhicule, présentant les étapes de procédé suivantes :
- fournir (S1) une ou plusieurs options d'itinéraire particulières (2) pour le calcul d'itinéraire par le système de navigation (1) ;
- envoyer (S2) un premier signal (m1) à un dispositif de traitement de données (3) externe au véhicule pour demander une ou plusieurs options d'itinéraire fournies par le dispositif de traitement de données (3) externe au véhicule pour le calcul d'itinéraire par le dispositif de traitement de données (3) externe au véhicule ;
- recevoir (S3) un deuxième signal (m2) du dispositif de traitement de données (3) externe au véhicule qui identifie une ou plusieurs des options d'itinéraire (4) fournies par le dispositif de traitement de données (3) externe au véhicule pour le calcul d'itinéraire ;
- sortir (S4) au moins l'une des options d'itinéraire particulières (2) ainsi qu'au moins l'une des options d'itinéraire (4) identifiées dans le deuxième signal au moyen d'un dispositif de sortie (5) du système de navigation (1) afin de permettre à un utilisateur une sélection parmi ladite au moins une option sortie des options d'itinéraire particulières (2) ainsi que ladite au moins une option sortie des options d'itinéraire (4) identifiées dans le deuxième signal ;
- détecter (S5) au moins une entrée de l'utilisateur du système de navigation (1) pour sélectionner l'une des options d'itinéraire sorties ;
- si l'option d'itinéraire sélectionnée est l'une des options d'itinéraire (4) identifiées dans le deuxième signal (m2), envoyer (S6) un troisième signal (m3) qui identifie cette option d'itinéraire sélectionnée au dispositif de traitement de données (3) externe au véhicule et recevoir (S7) un quatrième signal (m4) du dispositif de traitement de données (3) externe au véhicule qui identifie un itinéraire (6) associé à l'option d'itinéraire sélectionnée et calculé par le dispositif de traitement de données (3) externe au véhicule ;
- si l'option d'itinéraire sélectionnée est l'une des options d'itinéraire particulières (2), calculer (S8) un itinéraire (6) associé à cette option d'itinéraire ; et
- sortir (S9) l'itinéraire calculé (6) au moyen du dispositif de sortie (5) du système de navigation (1),
le système de navigation (1) ou le dispositif de traitement de données (3) externe au véhicule étant aménagé pour calculer l'itinéraire (6) à l'aide d'un départ et d'une destination.

2. Procédé selon la revendication 1, présentant en outre l'étape de procédé consistant à :
- fournir (S11) un ou plusieurs critères de filtrage prédéterminés (7) pour permettre un filtrage des options d'itinéraire (2, 4).

3. Procédé selon la revendication 2, dans lequel lors de l'envoi (S2) du premier signal (m1), au moins l'un des critères de filtrage prédéterminés (7) est envoyé au dispositif de traitement de données (3) externe au véhicule pour permettre une présélection des options d'itinéraire (4) fournies par le dispositif de traitement de données (3) externe au véhicule et identifiées dans le deuxième signal (m2).

4. Procédé selon la revendication 3, présentant en outre les étapes de procédé suivantes consistant à :
- fournir une option d'entrée pour la sélection d'au moins l'un des critères de filtrage prédéterminés par un utilisateur comme un critère de filtrage externe, et détecter (S12) une entrée associée de l'utilisateur ; et
- si au moins un critère de filtrage a été sélectionné, identifier (S13) ce critère de filtrage sélectionné comme un critère de filtrage externe ; et seuls étant envoyés (S2) au dispositif de traitement de données externe au véhicule les critères de filtrage qui sont identifiés comme des critères de filtrage externes (8).

5. Procédé selon l'une quelconque des revendications 2 à 4, présentant en outre l'étape de procédé consistant à :
- filtrer localement (S10) les options d'itinéraire (2, 4) particulières ou identifiées dans le deuxième signal (m2) à l'aide d'au moins l'un des critères de filtrage prédéterminés (7, 9) au moyen d'un équipement de traitement de données (10) du système de navigation (1) ; et
seules les options d'itinéraire filtrées étant sorties (S4).

6. Procédé selon la revendication 5, présentant en outre les étapes de procédé suivantes consistant à :
- fournir une option d'entrée pour sélectionner au moins l'un des critères de filtrage prédéterminés (7) comme critère de filtrage interne (9), et détecter (S14) une entrée associée ;
- si au moins un critère de filtrage a été sélectionné, identifier (S15) ce critère de filtrage sélectionné comme un critère de filtrage interne (9) ;
le filtrage local n'étant effectué (S10) qu'à l'aide des critères de filtrage (7, 9) qui sont identifiés comme des critères de filtrage internes (9).

7. Procédé selon l'une quelconque des revendications 2 à 6, dans lequel au moins l'un des critères de filtrage prédéterminés (7, 8, 9) identifie une propriété technique du véhicule.

8. Procédé selon l'une quelconque des revendications 2 à 7, présentant en outre l'étape de procédé consistant à :
- recevoir (S16) au moins l'un des critères de filtrage prédéterminés (7, 8, 9) au moyen d'une interface de communication (11) du système de navigation (1).

9. Procédé selon l'une quelconque des revendications 2 à 8, dans lequel au moins l'un des critères de filtrage prédéterminés (7, 8, 9) est basé sur un historique d'utilisation.

10. Procédé selon la revendication 9, présentant en outre l'étape de procédé consistant à :
- fournir l'historique d'utilisation qui est généré à l'aide d'entrées précédentes d'un utilisateur pour la sélection d'options d'itinéraire.

11. Procédé selon l'une quelconque des revendications précédentes, présentant en outre les étapes de procédé consistant à :
- détecter au moins une entrée de l'utilisateur qui indique une confirmation ou un rejet de l'association de l'itinéraire calculé (6) à l'option d'itinéraire sélectionnée ; et
- mémoriser une identification dans un historique d'utilisation fourni concernant la confirmation ou le rejet de l'association de l'itinéraire calculé (6) à l'option d'itinéraire sélectionnée ; ou
- si l'option d'itinéraire sélectionnée est l'une des options d'itinéraire (4) identifiées dans le deuxième signal, envoyer un cinquième signal au dispositif de traitement de données (3) externe au véhicule qui identifie la confirmation ou le rejet de l'association de l'itinéraire calculé (6) à l'option d'itinéraire sélectionnée.

12. Procédé selon l'une quelconque des revendications précédentes, dans lequel :
pour au moins l'une des options d'itinéraire (4) fournies par le dispositif de traitement de données (3) externe au véhicule, des données associées sont transmises au moyen du deuxième signal (m2) ; et
lors de la sortie (S4) de cette option d'itinéraire, le contenu des données associées est sorti au moins partiellement au moyen du dispositif de sortie (5).

13. Procédé selon l'une quelconque des revendications précédentes, présentant en outre les étapes de procédé consistant à :
- envoyer un autre premier signal à un autre dispositif de traitement de données externe au véhicule ;
- recevoir un autre deuxième signal de l'autre dispositif de traitement de données externe au véhicule ; et
dans lequel :
lors de la sortie des options d'itinéraire (S4), en outre au moins l'une des options d'itinéraire identifiées dans l'autre deuxième signal est sortie ; et
si l'option d'itinéraire sélectionnée est l'une des options d'itinéraire identifiées dans l'autre deuxième signal, envoyer un autre troisième signal à l'autre dispositif de traitement de données externe au véhicule et recevoir un autre quatrième signal qu'envoie l'autre dispositif de traitement de données externe au véhicule.

14. Programme informatique, en particulier pour un système de navigation (1), comprenant un code programme pour effectuer un procédé selon l'une quelconque des revendications précédentes.

15. Système de navigation (1) pour un véhicule, en particulier pour un véhicule automobile, le système de navigation (1) étant aménagé pour effectuer un procédé selon l'une quelconque des revendications 1 à 13.
